# EUROPÄISCHE PATENTSCHRIFT

(11) **EP 1 007 932 B1**
(45) Veröffentlichungstag und Bekanntmachung des Hinweises auf die Patenterteilung: **27.03.2002**
(21) Anmeldenummer: 98947452.3
(22) Anmeldetag: 25.08.1998
(51) Int. Cl.: G01M 3/24, G01M 3/36

(54) **VERFAHREN ZUR PRÜFUNG VON BEHÄLTERN MIT VERSCHLÜSSEN**
METHODS FOR TESTING SEALED CONTAINERS
PROCEDES DE CONTROLE DE RECIPIENTS MUNIS DE FERMETURES

(30) Priorität: 25.08.1997 DE 19736869
(43) Veröffentlichungstag der Anmeldung: 14.06.2000
(73) Patentinhaber: HEUFT SYSTEMTECHNIK GMBH, 56659 Burgbrohl (DE)
(72) Erfinder: HEUFT, Bernhard, D-56659 Brugbrohl (DE)
(74) Vertreter: Gritschneder, Martin, Dipl.-Phys.
(86) Internationale Anmeldenummer: EP9805380
(87) Internationale Veröffentlichungsnummer: WO9910722

(56) Entgegenhaltungen:
- DE-A- 4 004 965
- US-A- 4 187 718
- US-A- 5 144 838
- US-A- 5 353 631

## Beschreibung

Die Erfindung betrifft ein Verfahren zum Prüfen von Merkmalen von Behältern, die mit einem Verschluß verschlossen sind, wobei in dem Verschluß mechanische Schwingungen angeregt werden und die mechanischen Schwingungen analysiert werden. Bei diesen Merkmalen kann es sich beispielsweise um den mittigen Sitz des Verschlusses auf der Behälteröffnung, die Festigkeit der Anbringung des Verschlusses an der Behälteröffnung oder das Restluftvolumen bei Behältern handeln, in denen die Flüssigkeit zur Verdrängung der Restluft vor dem Verschließen aufgeschäumt wird oder die verfahrensbedingt randvoll gefüllt werden sollen. (Unabhängiger Anspruch 1)

Aus DE-A-40 04 965 ist es bekannt, Unterdruckverschlüsse mit federndem Deckel, insbesondere Unterdruck-Schraubverschlüsse, auf die Dichtigkeit ihrer Anbringung zu überprüfen, indem in dem Deckel mechanische Schwingungen erzeugt werden, die Schwingungen bezüglich ihrer Frequenz, Periodendauer, Zeitintegral der Amplitude und/oder Dämpfung verarbeitet und ausgewertet werden und daraus die Höhe des Unterdrucks im Behälter ermittelt wird. Der Unterdruck kann beispielsweise durch Einblasen von Wasserdampf in das verbleibende Restvolumen des Behälters erzeugt werden oder dadurch, daß das Getränk heiß eingefüllt wird. In jedem Fall entwickelt sich der Unterdruck erst nach Abkühlen des Wasserdampfes bzw. wenn das Getränk die Umgebungstemperatur angenommen hat. Ähnliche Verfahren zur Messung der Dichtigkeit des Verschlusses sind auch bei Behältern bekannt, in denen der Inhalt unter Überdruck steht, insbesondere bei Getränkeflaschen mit kohlensäurehaltigen Getränken wie Mineralwässer oder Bier. Auch dieser Überdruck baut sich erst allmählich auf. Eine Prüfung der Dichtigkeit von Behälterverschlüssen auf dem Umweg über eine Prüfung des Überdrucks oder Unterdrucks in einem Behälter ist daher erst möglich, wenn sich durch Temperaturausgleich der Unterdruck gebildet hat bzw. sich durch entweichende Kohlensäure ein gewisser Überdruck aufgebaut hat. Unmittelbar nach dem Aufbringen der Verschlüsse durch einen Verschließer muß man daher eine bestimmte Zeit abwarten, bevor die Dichtigkeitsprüfung durchgeführt werden kann. Auf einem Transporteur werden die Behälter mit einer Geschwindigkeit von ca. 0,5 m/s bis 1,5 m/s innerhalb dieser Zeit etwa 8 m weitertransportiert; unter der Annahme, daß sich merklicher Druckauf- bzw. -abbau erst nach frühestens 5-10 Sekunden einstellt (bei Heißabfüllung noch später), wird je nach Empfindlichkeit der Meßapparatur eine Prüfung über Druckunterschiede erst ab 5 bis 10 Meter hinter dem Verschließer möglich. Insbesondere da nicht nur der Druckaufbau/-abbau gering ist, sondern zusätzlich die Undichtigkeit äußerst gering ist.

Beim Abfüllen von schäumenden Getränken, insbesondere Bier, muß darauf geachtet werden, möglichst wenig Luft in die Flasche einzuschließen, da durch den Luftsauerstoff das Bier geschmacklich beeinträchtigt wird. Es besteht keine Möglichkeit die Größe des eingeschlossenen Luftvolumens laufend zu messen. Bisher kann die Größe des Luftvolumens nur stichprobenweise durch Öffnen der Bierflasche überprüft werden.

Der Erfindung liegt die Aufgabe zugrunde, eine möglichst einfache Prüfung von Merkmalen von Behältern mit Verschlüssen zu ermöglichen.

Bei einem Verfahren der eingangs genannten Art wird diese Aufgabe dadurch gelöst, daß die Analyse der in dem Verschluß angeregten Schwingungen unmittelbar nach dem Aufbringen der Verschlüsse durchgeführt wird, d.h. bevor sich in dem Behälter ein merklicher Unterdruck oder Überdruck aufgebaut hat.

Durch das erfindungsgemäße Verfahren können Merkmale wie der mittige Sitz des Verschlusses, die Güte der Crimpung bei Kronkorkverschlüssen oder Festigkeit der Anbringung des Verschlusses bei Twist-Off-Verschlüssen bzw. der richtige Sitz und Verschluß von Dosendeckeln geprüft werden, und das auch bei Produkten bzw. Fülltechniken, die kein Vakuum oder Überdruck erzeugen. Ferner wird eine laufende Kontrolle des bei aufschäumenden Getränken in den Behälter eingeschlossenen Luftvolumens ermöglicht.

Bei der Analyse der mechanischen Schwingungen des Verschlusses wird insbesondere die Frequenz, die Abklingzeit der Schwingung (Dämpfung), das Zeitintegral der Schwingungsamplitude und/oder die Absolutstärke der Schwingung untersucht.

Die Anregung der mechanischen Schwingung in dem Verschluß kann durch einen mittels eine Magnetspule erzeugten kurzen magnetischen Impuls oder durch einen kurzen Ultraschallimpuls oder mechanisches Anschlagen erfolgen. Die Detektierung der mechanischen Schwingungen des Verschlusses kann durch ein Mikrofon, auf induktivem Weg oder dergleichen erfolgen.

Nachfolgend wird zunächst das erfindungsgemäße Verfahren näher erläutert, soweit es die Untersuchung und Prüfung des richtigen Sitzes von Behälterverschlüssen betrifft. Diese Untersuchung erfolgt vorzugsweise dadurch, daß die Abklingzeit der Schwingung ermittelt wird und überprüft wird, ob die Abklingzeit außerhalb eines bestimmten Schwellwertbereiches liegt, was dann als Anzeichen für einen nicht korrekten Sitz des Behälterverschlusses interpretiert wird.

Ein anderes oder zusätzliches Prüfkriterium ist das Zeitintegral der Schwingungsstärke (Amplitude), das nachfolgend als "Energie" bezeichnet wird.

Die Prüfung erfolgt jeweils unmittelbar nach dem Anbringen des Behälterverschlusses. Dadurch kann der Einfluß einer Änderung des Innendrucks nach dem Verschließen des Behälters weitgehend eliminiert werden, da sich eine solche Änderung des Innendrucks erst mit einer gewissen zeitlichen Verzögerung einstellt.

Ziel der Erfindung ist letzten Endes, sicherzustellen, daß die Behälter dicht verschlossen sind. Die Dichtigkeit wird jedoch nicht unmittelbar durch Ermittlung des Innendrucks festgestellt, sondern dadurch, das die häufigste Ursache für undichte Behälterverschlüsse festgestellt wird, nämlich der nicht korrekte Sitz des Verschlusses.

Es hat sich gezeigt, daß Behälterverschlüsse, insbesondere Kronkorkdeckel, die schief oder nicht mittig auf der Öffnung einer Getränkeflasche sitzen, sich im Schwingverhalten von Verschlüssen mit richtigem Sitz unterscheiden. Die Messung der Schwingungsfrequenz ermöglicht dabei im allgemeinen keine sichere Unterscheidung, da die Frequenz schief sitzender Verschlüsse auch im Bereich mittig sitzender Verschlüsse liegen kann. Die Abklingzeit der Schwingung und die Energie der Schwingung haben sich dagegen als ein wesentlich zuverlässigeres Unterscheidungskriterium herausgestellt. Beide Werte hängen zwar zu einem gewissen Ausmaß auch vom Innendruck ab. In der Hauptsache hängen sie jedoch vom ordnungsgemäßen Anbringen des Verschlusses an dem Behälter ab. Es ist einleuchtend, daß ein schief gezogener Deckel ähnlich wie ein asymmetrisch aufgespanntes Trommelfell keine sauberen Schwingungen ausbilden kann. Insbesondere wenn der Deckel so schief auf der Flasche sitzt, daß auf einer Seite eine Öffnung zwischen dem Deckel und dem Öffnungsrand verbleibt, klingen Deckelschwingungen sehr rasch ab. Es hat sich gezeigt, daß das erfindungsgemäße Verfahren eine etwa um 10% bessere Erkennungssicherheit aufweist als ein Verfahren, bei dem mittels Frequenzanalyse die Dichtigkeit eines Verschlusses festgestellt wird.

In der älteren deutschen Patentanmeldung "Verfahren zur Bestimmung von Parametern, z.B. Füllstand, Druck, Gaszusammensetzung in verschlossenen Behältern", amtliches Aktenzeichen 196 46 685.7 vom 12. November 1996 (= PCT/EP97/06298 - WO 9821557), ist ein Verfahren zur Bestimmung von Parametern von verschlossenen Behältern angegeben, bei dem in einer Behälterwand primäre mechanische Schwingungen angeregt werden und dann die durch die primären mechanischen Schwingungen der Behälterwand in dem Behälter angeregten sekundären Schwingungen aufgenommen und analysiert werden, die innerhalb des Raumes zwischen Verschluß und der Flüssigkeit stattfinden, wobei aus der festgestellten Frequenz der sekundären Schwingungen die gesuchten Parameter ermittelt werden. Die primären Schwingungen und die sekundären Schwingungen treten zeitlich verschoben auf und können durch entsprechend zeitlich versetzte Meßfenster getrennt erfaßt werden. Die in dem zweiten Zeitfenster zu beobachtende Schwingung ist auf die Ausbildung einer stehenden Welle zwischen dem Deckel und dem Flüssigkeitsspiegel zurückzuführen. Bei einer nicht ordnungsgemäß verschlossenen Flasche ist die Ausbildung dieser stehenden Welle gestört, was sich insbesondere in kleineren Werten der gemessenen Energie der sekundären Schwingungen bemerkbar macht.

Das erfindungsgemäße Verfahren eignet sich sowohl für Kronkorken, die aufgecrimpt werden, als auch für Schraubverschlüsse, deren Gewinde durch Anrollen erst geformt wird, und für Twist-Off-Verschlüsse, als auch für Dosendeckel.

Vorrichtungen zum Aufbringen von Verschlüssen auf Getränkeflaschen, sogenannte Verschließer, bestehen im allgemeinen aus mehreren Crimp- bzw. Anrollorgangen. Es wurde festgestellt, daß die einzelnen Verschließorgane Verschlüsse mit unterschiedlichen Werten der Abklingzeit, der Energie und der Frequenz des Schwingungsmusters herstellen. Es hat sich insbesondere gezeigt, daß sich eine Änderung der Füll- und Verschließgeschwindigkeit bei vielen Verschließern in einer Änderung der Verschließkraft niederschlägt, was bedeutet, daß die Werte der Abklingzeit, der Energie und der Frequenz der einzelnen Verschließorgane von der Füll- und Verschließgeschwindigkeit abhängig sind und entsprechend korrigiert werden können, um eine optimale Konstanz zu erhalten. Insbesondere bei der Frequenzauswertung zeigen sich deutliche Unterschiede, was darauf zurückzuführen ist, daß die einzelnen Verschließorgane Verschlüsse mit unterschiedlichen Vorspannungen herstellen. Das erfindungsgemäße Prüfverfahren läßt sich daher dadurch verfeinern, daß den einzelnen Verschließorganen jeweils eigene Grenzwerte für die Beurteilung der Behälterverschlüsse zugeordnet werden. Es wird dadurch möglich, besonders enge Grenzwerte zu setzen und damit das erfindungsgemäße Verfahren mit einer hohen Treffsicherheit durchzuführen.

Gleichzeitig besteht auch die Möglichkeit, die einzelnen Verschließorgane einer Verschließvorrichtung so einzustellen, daß sie weitgehen einheitliche Verschlüsse produzieren, vorausgesetzt natürlich, daß die maschinenbautechnische Konstruktion der Verschließorgane eine Änderung dieser Einstellparameter zuläßt.

Eine genaue und gleichförmige Einstellung der Verschließparameter ist insbesondere für die in Amerika weit verbreiteten Twist-Off-Verschlüsse von Bedeutung, die ähnlich wie Kronkorken aufgecrimpt werden, beim Öffnen der Flasche jedoch wie ein Schraubverschluß durch eine kurze Drehung abgeschraubt werden. Hier ist es wichtig, daß die Crimpung in einem engen Toleranzbereich liegt, denn nicht fest genug gecrimpte Deckel werden leicht undicht oder lösen sich, während zu fest gecrimpte Dekkel nicht abgeschraubt werden können. Mittels des erfindungsgemäßen Verfahrens kann die Festigkeit oder Stärke der Crimpung, d.h. die durch die Crimpung bewirkte Vorspannung des Deckels, überprüft werden. Die Überprüfung kann sich dabei sowohl auf eine Messung der Energie als auch der Abklingzeit stützen. Besonders geeignet ist hierbei jedoch eine Messung der Frequenz der Deckelschwingung. Die Überprüfung der Deckelspannung sollte dabei unmittelbar nach dem Anbringen des Verschlusses durchgeführt werden, da sich dann ein eventuell entwickelnder Unter- oder Überdruck innerhalb des Behälters nur sehr wenig auf das Meßergebnis auswirkt.

Die gemessenen Werte der Frequenz, der Abklingzeit und der Energie werden auch durch die Dichtungsmasse innerhalb des Verschlusses, das sogenannte Compound, beeinflußt. Abweichungen der Meßwerte können ihren Grund daher auch in Unregelmäßigkeiten im Compound haben. Flaschen oder Behälter mit Unregelmäßigkeiten des Compounds werden daher ebenfalls als Ausschuß angesehen und aus der Produktion ausgeschleust.

Getränkeflaschen haben unterschiedliche Größen, d.h. Abweichungen in der vertikalen Höhe. Selbst bei genormten Flaschen einer Produktionscharge beträgt die Höhendifferenz bis zu 1,5 mm. Da wiederverwendete Flaschen auch von anderen Herstellern stammen können und einige Jahre alt sein können, treten Höhenabweichungen bis zu 10 mm auf. Der Abstand zwischen der Einrichtung zum Anregen der mechanischen Schwingungen in dem Verschluß, beispielsweise einer Magnetspule, und dem Verschluß selbst liegt dabei in der gleichen Größenordnung und beträgt üblicherweise zwischen 3 und 10 mm. Gleiches gilt für den Abstand zwischen dem Deckel und der Einrichtung zum Detektieren der mechanischen Schwingungen, beispielsweise einem Mikrofon. Für die Messung der Abklingzeit und gegebenenfalls der Frequenz spielen unterschiedliche Flaschengrößen zwar kaum eine Rolle. Die Energiemessung hängt jedoch sehr stark von der Flaschenhöhe ab, da zum einen die magnetische Erregung des Deckels mit zunehmendem Abstand zwischen Magnetspule und Deckel kleiner wird und zum anderen der Verlust im Schallpegel vom Deckel zurück zum Mikrofon ebenfalls größer wird. Der Wert der gemessenen Energie hängt daher stark vom Abstand zwischen Behälter und Meßeinrichtung ab. Vorzugsweise wird daher die Flaschenhöhe mittels einer Kamera, über Ultraschall, Laser, induktive Abstandsmessung oder dergleichen bestimmt und als Korrekturfaktor berücksichtigt. Der Korrekturfaktor hängt dabei exponentiell von dem ermittelten Abstand ab. Allerdings treten in den Grenzbereichen Nicht-Linearitäten auf und es ist daher vorzuziehen, den Korrekturfaktor anhand einer Korrekturkurve zu ermitteln, die durch Einzelmessungen mit verschiedenen Abständen aufgestellt wurde. Es kann zweckmäßig sein, auch die ermittelten Werte der Abklingzeit und der Frequenz in Abhängigkeit des Abstandes zwischen Verschluß und Meßeinrichtung zu korrigieren. Wie erwähnt, sind die erforderlichen Korrekturen hierbei wesentlich geringer, und sie können im allgemeinen über eine eingelernte Kurve vorgenommen werden.

Es wird nun die Anwendung des erfindungsgemäßen Verfahrens zur Bestimmung der Größe des Luftvolumens in Getränkeflaschen, die mit einem aufschäumenden Getränk wie Bier gefüllt sind, beschrieben. Die laufende Bestimmung des beim Verschließvorgang in die Flasche gelangenden Luftsauerstoffs ist ein bisher ungelöstes Problem des Abfüllvorgangs in modernen Brauereien. Zur Verdrängung des Luftsauerstoffs werden die Flaschen oder Dosen nach dem Füllen und kurz vor dem Verschließen mittels eines dünnen Wasserstrahls (sogenannte Wasser-Injektion) zum Aufschäumen gebracht. Durch den Schaum und das dabei entwickelte CO₂ wird die im Kopfraum verbleibende Luft verdrängt. Bisher war es nicht möglich, bei voller Produktionsgeschwindigkeit zu überprüfen, ob diese Verdrängung des Luftsauerstoffs einwandfrei von statten geht. Die Wasser-Injektion kann fehlerhaft verlaufen, da die Wasser-Injektion selbst fehlerhaft arbeiten kann oder weil ein Teil des Schaums einer an sich richtig aufgeschäumten Flasche durch die Zentrifugalkraft am Einlauf des Verschließers wieder aus der Flasche oder der Dose herausgeschleudert wird, so daß wieder Luft in den Kopfraum der Flasche oder Dose eindringen kann, die dann durch den Verschluß eingeschlossen wird. Der Luftsauerstoff reagiert in der Folgezeit mit dem Bier, was zumindest zu einer Geschmacksbeeinträchtigung führt. Zur Vermeidung von Geschmacksbeeinträchtigungen soll das miteingeschlossene Luftvolumen kleiner als 0,2 und vorzugsweise kleiner als 0,1 ml sein. In der Praxis treten jedoch Fälle auf, bei denen das eingeschlossene Luftvolumen bis zu einigen ml beträgt. Erst ab einer Größe von ca. 1 ml kann das Luftvolumen mit einer Lichtschranke erkannt werden. Kleinere Luftvolumina sind mit optischen Mitteln unter den Kronkorken nicht erkennbar und in Dosen garnicht erkennbar. Bisher konnte der Sauerstoffgehalt in den einzelnen Flaschen nur stichprobenweise durch Öffnen der Behälter bestimmt werden. Es wurde nunmehr gefunden, daß auch sehr kleine Luftblasen unter dem Verschluß durch Bestimmung der Dämpfungs- und/oder Energiewerte nach dem erfindungsgemäßen Verfahren festgestellt werden können.

Bei einer mittels Wasser-Injektion aufgeschäumten Bierflasche steht der Schaum bis zum Öffnungsrand und benetzt die Unterseite eines aufgebrachten Kronkorkverschlusses. Der die Unterseite des Kronkorkverschlusses benetzende Schaum dämpft mechanische Schwingungen des Deckels, so daß die Abklingzeit der mechanischen Schwingungen verkürzt wird und die Energie der Schwingungen verringert wird.

Bei dem erfindungsgemäßen Verfahren machen sich auch sehr kleine Luftvolumina unter dem Kronkorken durch signifikant längere Abklingzeit und eine höhere Energie der Schwingung bemerkbar. Ein zu großes Luftvolumen läßt sich daher am Überschreiten eines oberen Grenzwertes der Abklingzeit oder der Energie der Schwingung erkennen.

Die Abklingzeit der Schwingungen hängt auch von der Schaumdichte ab. Die Schaumdichte nimmt nach dem Aufschäumen relativ rasch ab, so daß vergleichbare Bedingungen zur Bestimmung des Luftvolumens durch Messung der Abklingzeit bzw. der Energie der Schwingungen nur bei weitgehend konstanter Füllgeschwindigkeit vorliegen. Bei unterschiedlichen Füllgeschwindigkeiten und unterschiedlicher Zeitdauer zwischen Aufschäumen, Verschließen und Durchführung der Messungen werden diese Unterschiede vorzugsweise in die Auswertung der Meßergebnisse einbezogen, d.h. die Grenzwerte entsprechend dem geringeren Dämpfungsverhalten von weniger Schaum heraufgesetzt. Zweckmäßig werden die Korrekturen wiederum anhand von Korrekturtabellen vorgenommen. Dadurch können auch bei unterschiedlichem zeitlichen Verlauf der einzelnen Maßnahmen, die für das Füllen und Verschließen der Behälter erforderlich sind, zuverlässige Aussagen über das Volumen eingeschlossener Luftblasen im Kopfraum der Behälter getroffen werden.

Anstatt die Schaumdichte anhand von Erfahrungswerten entsprechend der Füllgeschwindigkeit zu berücksichtigen, kann die Schaumdichte auch unmittelbar meßtechnisch erfaßt werden, z.B. über die Dämpfung eines Lichtstrahls, wobei dichter Schaum stärker dämpft, über die Dämpfung eines Röntgen- oder Gammastrahls, der durch höhere Schaumdichte stärker absorbiert wird, mittels Messung der Feinporigkeit des Schaums mittels einer Kamera, wobei dichterer Schaum feinere Poren aufweist, oder mittels Auswertung einer kapazitiven Füllstandskontrolle, die in der Lage ist, eine Aussage über die Schaumdichte zu treffen. Ein so erhaltener Wert kann dazu benutzt werden, Dämpfungs- bzw. Energiewerte der Schwingung derart zu kompensieren, daß bei unterschiedlichen Betriebsbedingungen (unterschiedliche Geschwindigkeiten, verschiedene Biersorten, anderes Aufschäumverhalten) eine zuverlässige Erkennung auch von nur kleinen Luftblasen gewährleistet ist.

Beide Anwendungsmöglichkeiten des erfindungsgemäßen Verfahrens lassen sich bei dem Abfüllen von Getränken kombinieren, die zur Verdrängung von restlicher Luft unmittelbar vor dem Verschließen aufgeschäumt werden, also z.B. bei Bier. Bei den Gut-Flaschen befindet sich die Abklingzeit dabei innerhalb eines bestimmten Bereichs. Ist die Abklingzeit länger als der obere Grenzwert dieses Bereichs, so ist dieses ein Hinweis darauf, daß ein zu großes Restluftvolumen in der Flasche verblieben ist. Ist die Abklingzeit dagegen kürzer als der untere Grenzwert, so ist dies ein Hinweis darauf, daß der Verschluß nicht richtig auf der Flaschenöffnung sitzt. Entsprechendes gilt für die Energie der Schwingung, d.h. das Zeitintegral der Amplitude; ein zu hoher Energiewert deutet auf ein zu großes Restluftvolumen hin und ein zu niedriger Energiewert deutet auf einen schlecht sitzenden Verschluß hin.

Die oben nur in Verbindung mit der Überprüfung des mittigen Sitzes von Behälterverschlüssen beschriebene Korrektur der Meßwerte zur Berücksichtigung von Abweichungen in der Flaschenhöhe und ebenso die nur in Verbindung mit dem Messen des Restvolumens erwähnte Korrektur zur Berücksichtigung der zwischen Verschließen der Behälter und Durchführung der Messung verstrichenen Zeit sind jeweils grundsätzlich auch bei allen anderen hier beschriebenen Ausführungsformen des erfindungsgemäßen Verfahrens zweckmäßig.

Ebenso können die oben beschriebenen Verfahren auch bei anderen Behältern und Verschlußarten wie z.B. Dosen angewandt werden.

Eine weitere Möglichkeit, Restluft im Produkt auszuschließen ist das sogenannte Randvoll- bzw. Schwarzvollfüllen bei Heißabfüllung von Fruchtsäften. Hierbei kann mittels des oben beschriebenen Verfahrens direkt hinter dem Verschließer die Benetzung des Verschlusses bzw. eine akzeptabel kleine Luftblase festgestellt werden.

Ein Ausführungsbeispiel der Erfindung wird nachfolgend anhand der Zeichnung näher erläutert. Es zeigen:
- Fig. 1: im Querschnitt eine Vorrichtung zum Prüfen von Behälterverschlüssen;
- Fig. 2 und 3: den Signalverlauf bei Gut-Flaschen;
- Fig. 4 bis 6: den Signalverlauf bei schräg sitzenden Verschlüssen; und
- Fig. 7 und 8: den Signalverlauf bei zu großen Restluftmengen.

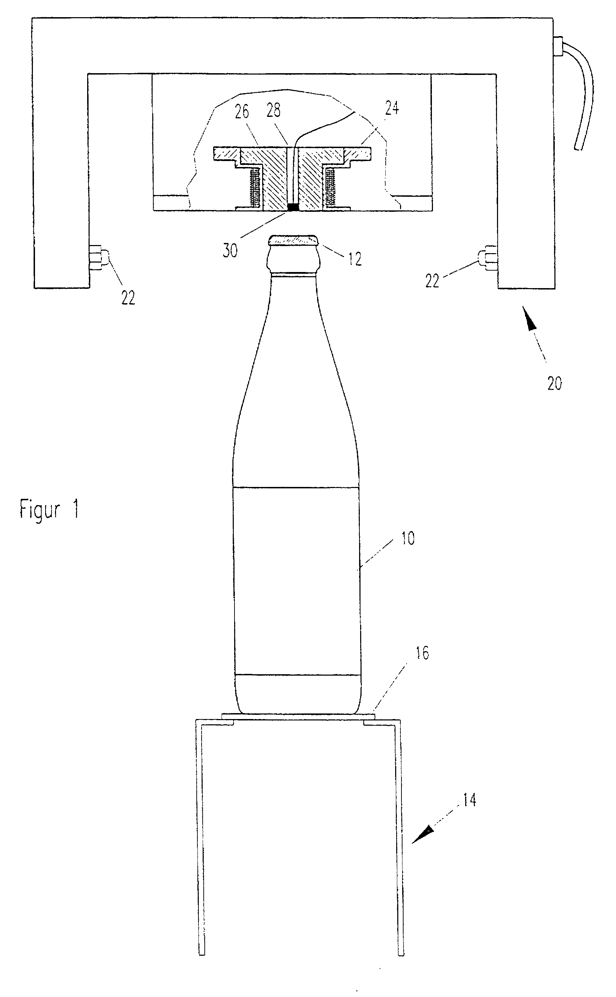

Bei dem in Fig. 1 dargestellten Ausführungsbeispiel ist der Flüssigkeitsbehälter eine übliche 0,5 1-Bierflasche 10 mit einem metallenen Kronenverschluß 12. Die Flasche 10 wird stehend auf einem Transporteur 14 mittels einer Gliederkette 16 unter einer Meßeinrichtung 20 hindurch transportiert.

Die Meßeinrichtung 20 enthält eine Lichtschranke 22, deren Lichtstrahl die Flasche 10 unmittelbar unterhalb der Mündungsöffnung trifft, die durch den Kronenverschluß 12 verschlossen ist. In einem Abstand von 3 bis 10 mm über dem Kronenverschluß 12 ist eine Magnetspule 24 angeordnet, deren Achse vertikal und damit parallel zur Längsachse der Flasche 12 verläuft. Die Magnetspule 24 enthält einen Kern 26 mit einer axialen Bohrung 28, an deren unterem Ende ein Mikrofon 30 angeordnet ist.

Die Höhe der Lichtschranke 22 über dem Transporteur 14 und ebenso der vertikale Abstand zwischen der Lichtschranke 22 und der Magnetspule 24 sowie dem Mikrofon 30 ist veränderbar, so daß Flaschen unterschiedlicher Größe und Form und auch sonstige Behälter untersucht werden können. Die Vorrichtung weist ferner eine nicht dargestellte Einrichtung zur Messung des Abstandes zwischen dem Mikrofon 30 und dem Kronenverschluß 12 auf. Diese Einrichtung arbeitet mittels induktiver Abstandsmessung.

Im Betrieb erzeugt die Lichtschranke 22 ein Triggersignal zu dem Zeitpunkt, zu dem sich der Kronenverschluß 12 unter der Magnetspule 24 befindet und die Magnetspule 24 wird durch dieses Triggersignal mittels eines kurzen Stromimpulses erregt. Das dadurch erzeugte kurzzeitige Magnetfeld übt auf den aus Metall bestehenden Kronenverschluß 12 kurzzeitig eine nach oben gerichtete Kraft aus, die in dem Kronenverschluß 12 eine primäre mechanische Schwingung oder Vibration auslöst. Diese Vibration hat typischerweise eine Frequenz von 7 kHz und kann daher als akustisches Signal von dem Mikrofon 30 aufgenommen werden.

Die Schwingung des Kronenverschlusses ist stark gedämpft und klingt innerhalb einer bestimmten Zeit τ auf den Wert 1/e ab. Ist die Abklingzeit kürzer, so deutet dies darauf hin, daß der Kronkorken nicht korrekt aufgebracht ist. Die Flasche wird daher aus dem Produktionsablauf ausgeschleust. Beträgt die Abklingzeit dagegen mehr, so ist dies ein Hinweis darauf, daß bei der vorausgehenden Heißwasser-Injektion das Bier in der Flasche nicht genügend aufgeschäumt wurde oder der Schaum herausgeschleudert wurde, so daß im Kopfbereich ein Luftvolumen vorhanden ist. Diese Flaschen werden ebenfalls aus dem weiteren Produktionsablauf ausgeschleust.

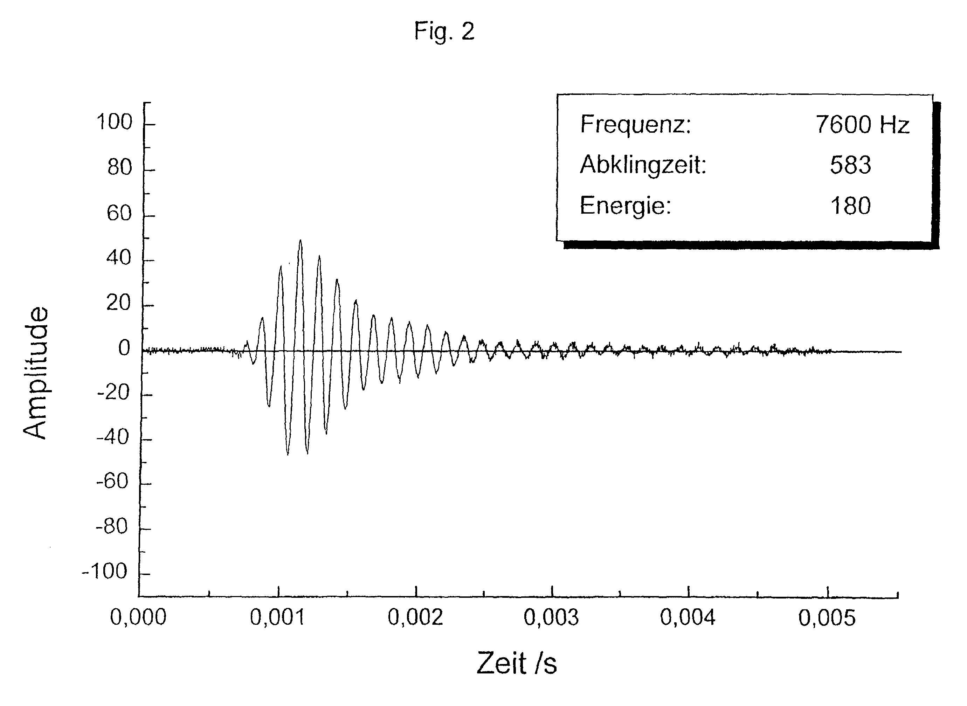

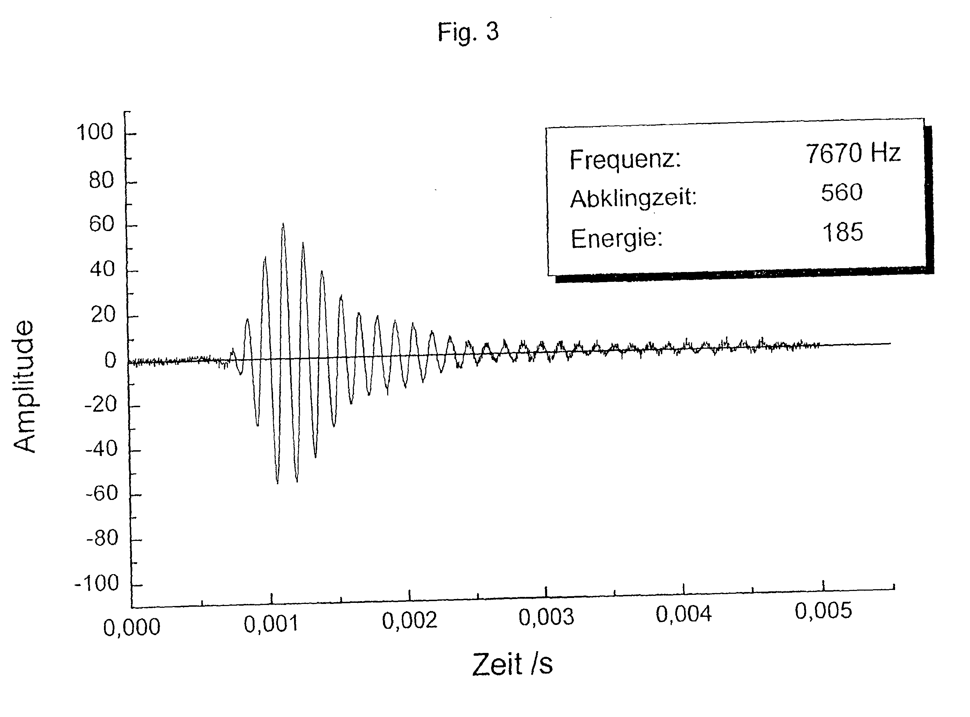

Die Fig. 2 bis 8 zeigen Diagramme mit unterschiedlichen Signalverläufen. Die Diagramme der Fig. 2 und 3 betreffen Gut-Flaschen, und zwar 12-ounce-long-neck-Bierflaschen. Die Parameter für Gut-Flaschen liegen in folgenden Bereichen:

| | |
|---|---|
| Frequenz | 7200 - 7800 Hz |
| Abklingzeit | 400 - 600 (relative Einheiten) |
| Energie | 150 - 250 (relative Einheiten) |

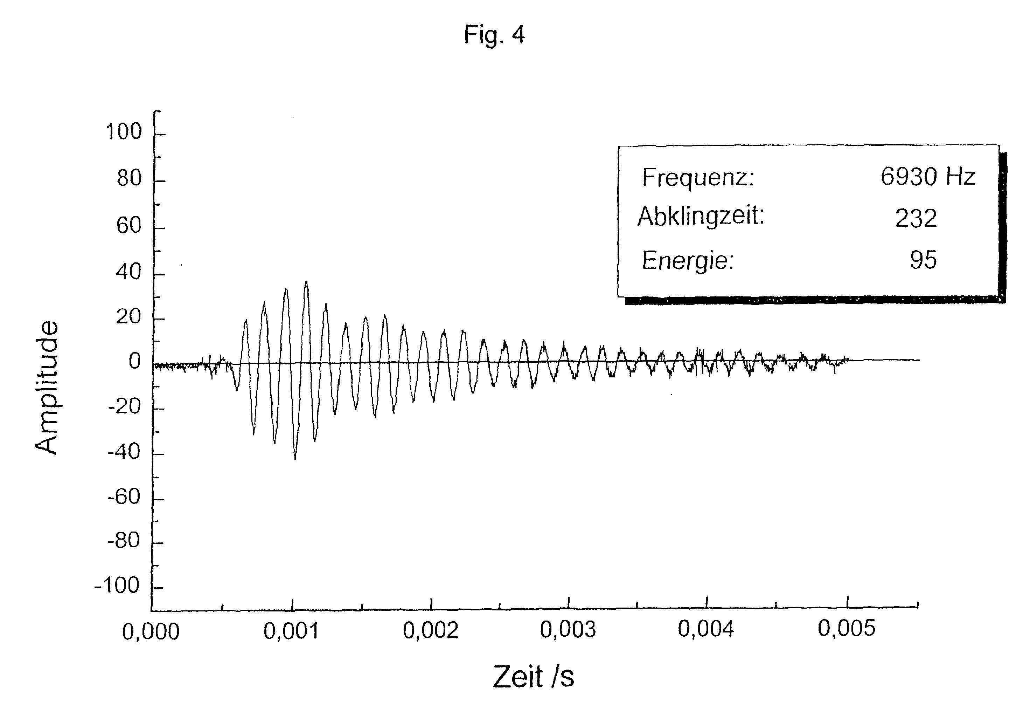

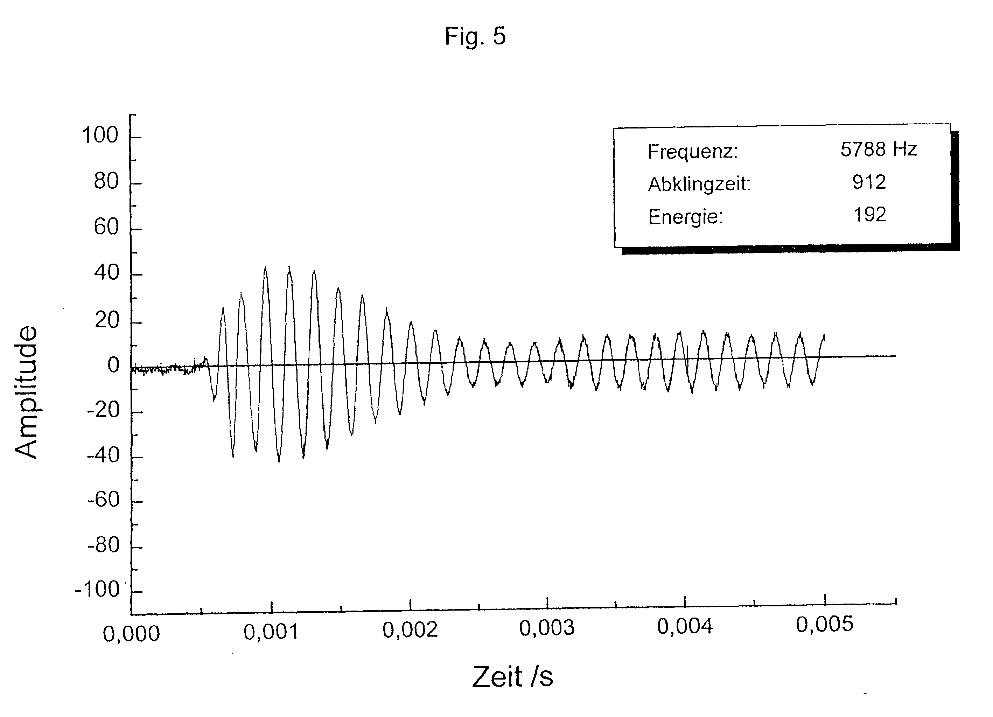

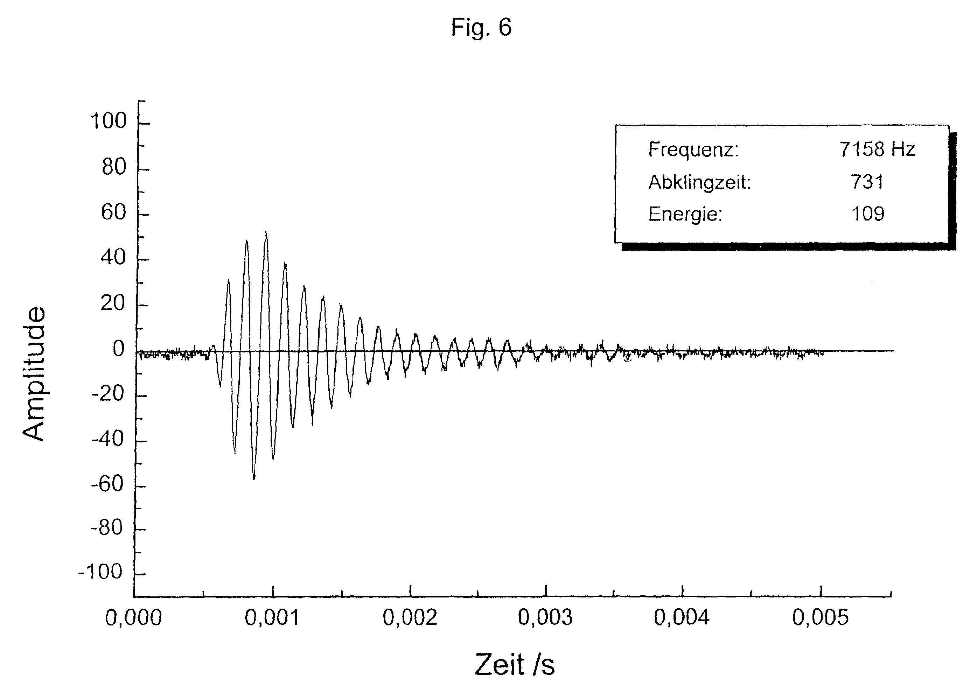

Ein spezielles Problem, sind Flaschen mit nicht zentrisch sitzendem Verschluß. Aufgrund ihrer unregelmäßigen Form schwingen diese Verschlüsse in komplizierten Schwingungsmodi, deren mittlere Frequenz in einem wesentlich größeren Bereich als normal schwankt. Dieser Bereich überlappt sich mit dem von Gut-Flaschen, so daß nicht auszuschließen ist, daß derartige Schlecht-Flaschen ähnliche Frequenzwerte wie Gut-Flaschen besitzen. Die Häufigkeit hängt sehr vom Flaschen- und Verschlußmaterial sowie von der Art des Verschließers ab. Die Identifikation. solcher Schlecht-Flaschen allein durch die Frequenz gelingt daher nicht. Es werden daher als zusätzliche Parameter die Abklingzeit oder die Energie aus den Signalverläufen extrahiert. Unterscheidet sich eine Flasche in einem der drei Parameter Frequenz, Abklingzeit oder Energie von Gut-Flaschen, so wird sie aus dem Produktionsablauf ausgeschleust. Beispiele von Signalverläufen von Flaschen mit schiefsitzendem Verschluß sind in den Fig. 4 bis 6 angegeben. In Fig. 4 weicht die Frequenz geringfügig, die Abklingzeit und die Energie jedoch deutlich von den Werten von Gut-Flaschen ab. Bei dem Diagramm von Fig. 5 ist die Frequenz und die Energie niedriger, die Abklingzeit jedoch länger als bei Gut-Flaschen. In dem Diagramm von Fig. 6 weicht die Frequenz kaum von der von Gut-Flaschen ab, während die Abklingzeit deutlich länger und die Energie deutlich geringer ist.

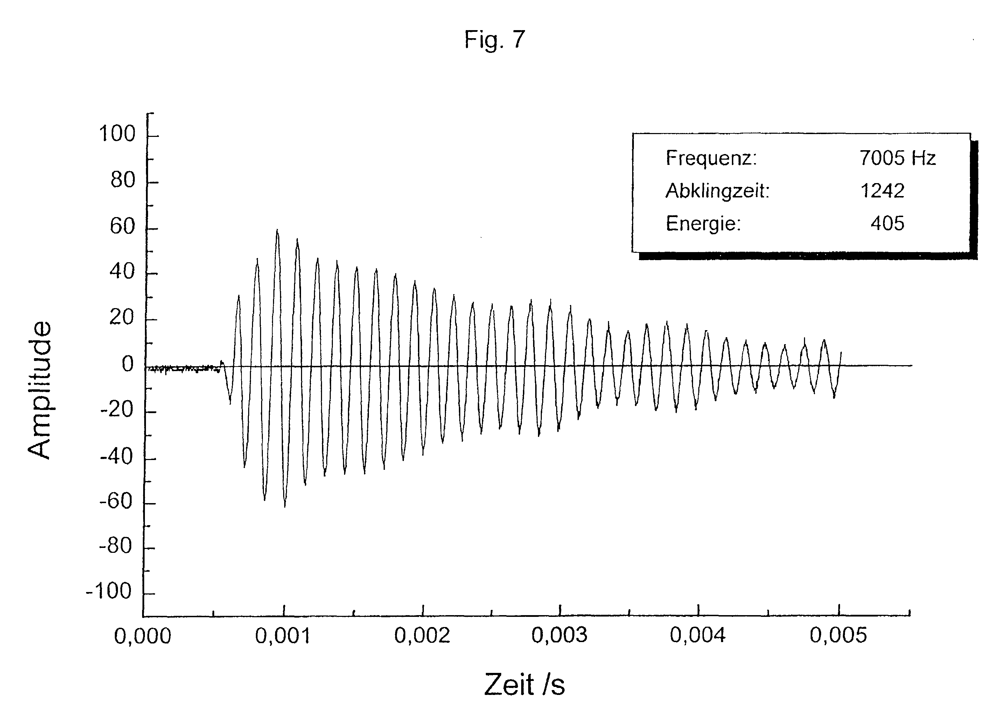

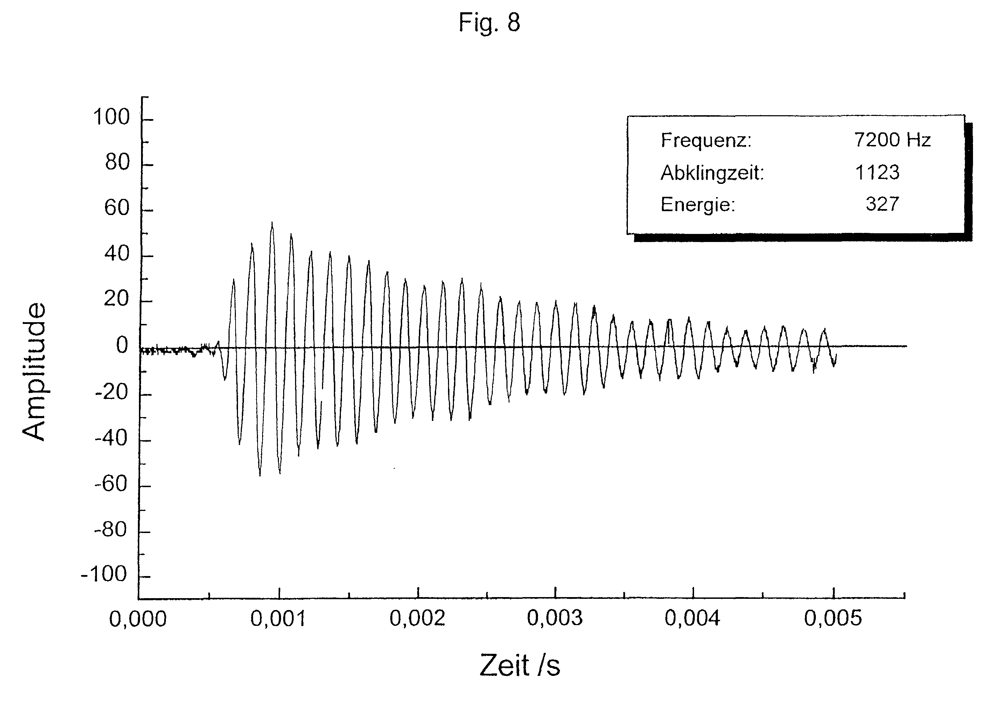

Die Fig. 7 und 8 zeigen Diagramme mit Signalverläufen von Schlecht-Flaschen mit zu großem Restluftvolumen. Zur Erkennung solcher Schlecht-Flaschen ist es zweckmäßig, wenn die Messung unmittelbar nach dem Verschließer durchgeführt wird. Bei Flaschen mit zu großem Restluftvolumen wird die Schwingung des Verschlusses nicht durch den dichten Schaum gedämpft, was sich dahin äußert, daß der Energiewert erhöht und die Abklingzeit verlängert ist. Ein Vergleich mit den Diagrammen der Fig. 2 und 3, die Gut-Flaschen mit geringem oder ohne Restluftvolumen betreffen, zeigt, daß die Frequenz nicht ausreicht, um derartige Fälle zu erkennen, daß in der Abklingzeit und der Energie jedoch deutliche Unterschiede bestehen.

## Patentansprüche

1. Verfahren zum Prüfen von Merkmalen von mittels eines Verschlusses (12) verschlossenen Behälters (10), wie mittigem Sitz des Verschlusses (12) auf der Behälteröffnung, Festigkeit des Sitzes des Verschlusses (12) oder Restluftvolumen in Behältern (10), in denen die Flüssigkeit zur Verdrängung des Restluftvolumens vor dem Verschließen aufgeschäumt wird, wobei in dem Verschluß (10) mechanische Schwingungen angeregt werden und die mechanischen Schwingungen analysiert werden, **dadurch gekennzeichnet, daß** die Analyse der mechanischen Schwingungen unmittelbar nach dem Aufbringen des Verschlusses (12) erfolgt, bevor in dem Behälter eine wesentliche Änderung des Innendruckes stattfindet.

2. Verfahren nach Anspruch 1, **dadurch gekennzeichnet, daß** zur Analyse der Schwingungen des Verschlusses (12) die Frequenz, die Abklingzeit, die Schwingungsamplitude und/oder das Zeitintegral der Schwingungsamplitude untersucht und mit Grenzwerten verglichen werden.

3. Verfahren nach Anspruch 1 oder 2 zur Feststellung des richtigen Sitzes des Verschlusses (10), **dadurch gekennzeichnet, daß** die Abklingzeit und/oder das Zeitintegral der Schwingungsamplitude mit einem Grenzwert verglichen werden, wobei das Unterschreiten des Grenzwertes auf einen falschen Sitz des Verschlusses (10) hinweist.

4. Verfahren nach Anspruch 3, **dadurch gekennzeichnet, daß** die Energie einer Schwingung gemessen wird, die als stehende Welle zwischen dem Verschluß und der Flüssigkeitsoberfläche in dem Behälter ausgebildet wird, wobei diese Schwingung durch die in dem Verschluß angeregte mechanische Schwingung verursacht wird.

5. Verfahren nach Anspruch 1 oder 2 zur Feststellung des Restluftvolumens, **dadurch gekennzeichnet, daß** die Abklingzeit und/oder das Zeitintegral der Signalamplitude mit einem oberen Grenzwert verglichen werden, wobei das Überschreiten des Grenzwertes auf ein zu großes Restluftvolumen hinweist.

6. Verfahren nach Anspruch 1 oder 2 zum Prüfen der Festigkeit der Anbringung eines Verschlusses (12) an der Öffnung eines Behälters (10), **dadurch gekennzeichnet, daß** in dem Verschluß (10) mechanische Schwingungen angeregt werden und die mechanischen Schwingungen analysiert werden, indem die Abklingzeit der Schwingung und das Zeitintegral der Schwingungsamplitude mit Grenzwerten verglichen wird.

7. Verfahren nach einem der Ansprüche 1 bis 6, **dadurch gekennzeichnet, daß** die mechanischen Schwingungen in dem Verschluß (12) durch einen von einem Schwingungserzeuger, beispielsweise einer Magnetspule (24), erzeugten Impuls angeregt werden und daß die in dem Verschluß (12) angeregten mechanischen Schwingungen durch einen Aufnehmer, beispielsweise ein Mikrofon (30), aufgenommen werden.

8. Verfahren nach Anspruch 7, **dadurch gekennzeichnet, daß** der Abstand zwischen dem Schwingungserzeuger (Magnetspule 24) und dem Verschluß (12) und zwischen dem Aufnehmer (Mikrofon 30) und dem Verschluß (12) gemessen wird und daß die ermittelten Werte der Frequenz, der Abklingzeit, der Schwingungsamplitude bzw. des Zeitintegrals der Schwingungsamplitude entsprechend den gemessenen Abständen korrigiert werden.

9. Verfahren nach einem der Ansprüche 1 bis 8, **dadurch gekennzeichnet, daß** die ermittelten Werte der Frequenz, der Abklingzeit, der Schwingungsamplitude bzw. des Zeitintegrals der Schwingungsamplitude unter Berücksichtigung der zwischen dem Anbringen der Verschlüsse (12) und der Durchführung der Messung verstrichenen Zeit korrigiert werden.

10. Verfahren nach einem der Ansprüche 1 bis 9, **dadurch gekennzeichnet, daß** die Schaumdichte der in dem Behälter abgefüllten Flüssigkeit gemessen wird und daß die ermittelten Werte der Frequenz, der Abklingzeit, der Schwingungsamplitude bzw. des Zeitintegrals der Schwingungsamplitude unter Berücksichtigung der gemessenen Schaumdichte korrigiert werden.

11. Verfahren nach einem der Ansprüche 1 bis 10, wobei in einem Arbeitsgang jeweils eine größere Anzahl von Flaschen mittels einer Verschließvorrichtung mit einer entsprechenden Anzahl von Verschließorganen mit Verschlüssen versehen wird, **dadurch gekennzeichnet, daß** jedem Verschließorgan eigene Grenzwerte der gemessenen Schwingungsparameter zugeordnet sind.

## Claims

1. Method for testing features of a container (10) sealed by means of a closure (12), such as the central fit of the closure (12) on the container opening, tightness of the fit of the closure (12) or the residual air volume in containers (10) in which the liquid is foamed up prior to closure in order to expel the residual air volume, wherein mechanical vibrations are excited in the closure (12) and the mechanical vibrations are analysed, **characterized in that** the analysis of the mechanical vibrations occurs directly after the closure (12) has been fitted before major change in the internal pressure takes place in the container.

2. Method according to claim 1, **characterized in that** the frequency, the decay time, the vibration amplitude and/or the time integral of the vibration amplitude are examined in order to analyse the vibrations of the closure (12) and compared with limit values.

3. Method according to claim 1 or 2 for ascertaining the correct fit of the closure (10), **characterized in that** the decay time and/or the time integral of the vibration amplitude are compared with a limit value, the failure to reach the limit value indicating a false fit of the closure (10).

4. Method according to claim 3, **characterized in that** the energy of a vibration is measured which is developed as standing wave between the closure and the liquid surface in the container, this vibration being caused by the mechanical vibration excited in the closure.

5. Method according to claim 1 or 2 for ascertaining the residual air volume, **characterized in that** the decay time and/or the time integral of the signal amplitude is compared with an upper limit value, the exceeding of the limit value indicating too large a residual air volume.

6. Method according to claim 1 or 2 for testing the tightness of the attachment of a closure (12) to the opening of a container (10), **characterized in that** mechanical vibrations are excited in the closure (10) and the mechanical vibrations are then analysed by comparing the decay time of the vibration and the time integral of the vibration amplitude with limit values.

7. Method according to one of claims 1 to 6, **characterized in that** the mechanical vibrations in the closure (12) are excited by a pulse produced by a vibration generator, e.g. a magnetic coil (24) and the mechanical vibrations excited in the closure (12) are recorded by a recorder, e.g. a microphone (30).

8. Method according to claim 7, **characterized in that** the distance between the vibration generator (magnetic coil 24) and the closure (12) and between the recorder (microphone 30) and the closure (12) is measured and that the ascertained values for frequency, decay time, the vibration amplitude or, respectively, the time integral of the vibration amplitude are corrected in accordance to the measured distances.

9. Method according to one of claims 1 to 8, **characterized in that** the ascertained values for frequency, decay time, the vibration amplitude or the time integral of the vibration amplitude are corrected taking into account the time which has elapsed between the attachment of the closures (12) and the carrying out of the measuring.

10. Method according to one of claims 1 to 9, **characterized in that** the foam density of the liquid packaged in the container is measured and the ascertained values for the frequency, the decay time, the vibration amplitude or, respectively, the time integral of the vibration amplitude are corrected taking into account the measured foam density.

11. Method according to one of claims 1 to 10, wherein in one operation a larger number of bottles is each case provided with closures by means of a closure device including a corresponding number of closure organs, **characterized in that** each closure organ is allocated its own limit values for the measured vibration parameters.

## Revendications

1. Procédé pour contrôler les caractéristiques d'un récipient (10) fermé au moyen d'une fermeture (12), comme l'ajustement central de la fermeture (12) sur l'ouverture du récipient, la résistance de l'ajustement de la fermeture (12) ou le volume d'air restant dans des récipients (10), dans lesquels on fait mousser le liquide avant la fermeture pour refouler le volume d'air restant, des vibrations mécaniques étant amorcées dans la fermeture (10) et les vibrations mécaniques étant analysées, **caractérisé en ce que** l'analyse des vibrations mécaniques s'effectue juste après l'application de la fermeture (12) avant qu'on ait une modification importante de la pression interne dans le récipient.

2. Procédé selon la revendication 1, **caractérisé en ce que**, pour analyser les vibrations de la fermeture (12), on étudie la fréquence, le temps de décroissance, l'amplitude de vibration et/ou l'intégrale dans le temps de l'amplitude de vibration et on les compare avec des valeurs limites.

3. Procédé selon la revendication 1 ou 2 pour déterminer l'ajustement correct de la fermeture (10), **caractérisé en ce que** le temps de décroissance et/ou l'intégrale dans le temps de l'amplitude de vibration sont comparés avec une valeur limite, le sous-dépassement de la valeur limite indiquant un mauvais ajustement de la fermeture (10).

4. Procédé selon la revendication 3, **caractérisé en ce qu'**on mesure l'énergie d'une vibration qui est réalisée sous la forme d'une onde stationnaire entre la fermeture et la surface du liquide dans le récipient, cette vibration étant causée par la vibration mécanique amorcée dans la fermeture.

5. Procédé selon la revendication 1 ou 2 pour déterminer le volume d'air restant, **caractérisé en ce que** le temps de décroissance et/ou l'intégrale dans le temps de l'amplitude de signal sont comparés avec une valeur limite supérieure, le dépassement de la valeur limite indiquant un trop grand volume d'air restant.

6. Procédé selon la revendication 1 ou 2 pour contrôler la résistance de l'application d'une fermeture (12) sur l'ouverture d'un récipient (10), **caractérisé en ce que** des vibrations mécaniques sont amorcées dans la fermeture (10) et les vibrations. mécaniques sont analysées en comparant le temps de décroissance de la vibration et l'intégrale dans le temps de l'amplitude de vibration avec des valeurs limites.

7. Procédé selon l'une quelconque des revendications 1 à 6, **caractérisé en ce que** les vibrations mécaniques dans la fermeture (12) sont amorcées par une impulsion produite par un générateur de vibrations, par exemple une bobine d'aimant (24) et **en ce que** les vibrations mécaniques amorcées dans la fermeture (12) sont enregistrées par un capteur, par exemple un microphone (30).

8. Procédé selon la revendication 7, **caractérisé en ce que** l'espacement entre le générateur de vibrations (bobine d'aimant 24) et la fermeture (12) et entre le capteur (microphone 30) et la fermeture (12) est mesuré et **en ce que** les valeurs calculées de la fréquence, du temps de décroissance, de l'amplitude de vibration et de l'intégrale dans le temps de l'amplitude de vibration sont corrigées en fonction des distances mesurées.

9. Procédé selon l'une quelconque des revendications 1 à 8, **caractérisé en ce que** les valeurs calculées de la fréquence, du temps de décroissance, de l'amplitude de vibration et de l'intégrale dans le temps de l'amplitude de vibration sont corrigées en tenant compte du temps écoulé entre l'application des fermetures (12) et l'exécution de la mesure.

10. Procédé selon l'une quelconque des revendications 1 à 9, **caractérisé en ce que** la densité de mousse du liquide versé dans le récipient est mesurée et **en ce que** les valeurs calculées de la fréquence, du temps de décroissance, de l'amplitude de vibration et de l'intégrale dans le temps de l'amplitude de vibration sont corrigées en tenant compte de la densité de mousse mesurée.

11. Procédé selon l'une quelconque des revendications 1 à 10, un nombre assez grand de bouteilles étant pourvu de fermetures en une seule opération au moyen d'un dispositif de fermeture avec un nombre correspondant d'organes de fermeture, **caractérisé en ce que** des valeurs limites propres des paramètres de vibration mesurés sont attribuées à chaque organe de fermeture.
